# EUROPEAN PATENT APPLICATION

(11) **EP 4 683 158 A1**
(43) Date of publication of application: **21.01.2026**
(21) Application number: 24770768.0
(22) Date of filing: 08.03.2024
(51) Int. Cl.: H02J 7/00, H01M 10/6563, H01M 50/244

(54) **HOLDING DEVICE**

(30) Priority: 14.03.2023 JP 2023039311
(71) Applicant: HONDA MOTOR CO., LTD., Tokyo 105-8404 (JP)
(72) Inventor: HIRANUMA, Junji, Wako-shi, Saitama 351-0193 (JP); GODA, Ryuki, Wako-shi, Saitama 351-0193 (JP)
(74) Representative: Weickmann & Weickmann PartmbB
(86) International application number: PCT/JP2024/009041
(87) International publication number: WO 2024/190662

(57) **Abstract**

A holding device (1) includes a holding portion (2) including a first portion (31) and a second portion (32), the first portion holding a first surface of a storage device, the first surface facing a first direction, the second portion holding a second surface of the storage device and facing a second direction which intersects the first direction, the holding portion holding the storage device to be detachable. The holding device (1) includes a bottom portion (3) which faces a placement surface (F) when the holding device (1) is placed. An internal space (40) is formed inside the holding device (1), the internal space including a first space (41) and a second space (42), the first space (41) being defined by the first portion (31) and the bottom portion (3), the second space (42) being defined by the second portion (32) and the bottom portion (3) and communicating with the first space (41). The holding device (1) includes, in the second space (42), an air-flow generator (80) which promotes a flow of air passing through the first space (41) and the second space (42).

## Description

### TECHNICAL FIELD

The present invention relates to a holding device.

Priority is claimed on Japanese Patent Application No. 2023-039311, filed March 14, 2023, the content of which is incorporated herein by reference.

### BACKGROUND ART

For example, Patent Document 1 discloses a charger including a tray on which a battery is placed, and a control device that controls charging of the battery. The control device is disposed below a first inclined surface of the tray. The control device is disposed in a substantially closed housing.

### Citation List

### Patent Document

Patent Document 1: PCT International Publication No. WO 2021/059685

### SUMMARY OF INVENTION

### Technical Problem

In a case where the control device is disposed in the substantially closed housing, however, natural air cooling that relies on air convection in the housing is conducted. In the natural air cooling, there is a concern that an excessive temperature rise in the housing due to heat generation of an electric circuit may cause a decrease in life of an electronic component. For this reason, there is a demand for promoting the flow of air in an internal space of a holding device.

In order to solve the above problem, an object of the present application is to promote the flow of air in an internal space of a holding device.

### Solution to Problem

As a means for solving the above problem, according to aspects of the present invention, following constitutions are included.
(1) A holding device (for example, a holding device 1 in an embodiment) according to one aspect of the present invention includes a holding portion (for example, a holding portion 2 in an embodiment), the holding portion including a first portion (for example, a first portion 31 in an embodiment) and a second portion (for example, a second portion 32 in an embodiment), the first portion holding a first surface (for example, a lower surface 12 in an embodiment) of a storage device (for example, a storage device 10 in an embodiment), the first surface facing a first direction, the second portion holding a second surface (for example, a rear surface 16 in an embodiment) of the storage device, the second surface facing a second direction which intersects the first direction, the holding portion holding the storage device to be detachable, in which the holding device includes a bottom portion (for example, a bottom portion 3 in an embodiment) which faces a placement surface (for example, a placement surface F in an embodiment) when the holding device is placed, an internal space (for example, an internal space 40 in an embodiment) is formed inside the holding device, the internal space including a first space (for example, a first space 41 in an embodiment) and a second space (for example, a second space 42 in an embodiment), the first space being defined by the first portion and the bottom portion, the second space being defined by the second portion and the bottom portion, the second space communicating with the first space, and the holding device includes, in the second space, an air-flow generator (for example, an air-flow generator 80 in an embodiment) which promotes a flow of air passing through the first space and the second space.
(2) The holding device described in the above (1) may further include a partition portion (for example, a partition portion 45 in an embodiment) which partitions the second space into an air-flow generator disposed space (for example, an air-flow generator disposed space 43 in an embodiment) in which the air-flow generator is disposed and an air-flow generator non-disposed space (for example, an air-flow generator non-disposed space 44 in an embodiment) in which no air-flow generator is disposed.
(3) The holding device described in the above (2) may further include a second terminal (for example, a second terminal 35 in an embodiment) provided in the air-flow generator non-disposed space, the second terminal being attachable to and detachable from a first terminal (for example, a first terminal 18 in an embodiment) provided on the storage device.
(4) In the holding device described in any one of the above (1) to (3), the first portion and the second portion may extend in directions which obliquely intersect the bottom portion.
(5) In the holding device described in the above (4), a first defined angle (for example, a first defined angle A1 in an embodiment) which is the smallest defined angle among angles defined by the first portion and the bottom portion may be smaller than a second defined angle (for example, a second defined angle A2 in an embodiment) which is the smallest defined angle among angles defined by the second portion and the bottom portion.
(6) In the holding device described in any one of the above (1) to (5), the holding portion may be provided to attach and detach the storage device in a direction along the first portion (for example, an arrow V1 direction in an embodiment), the holding device may further include a front portion (for example, a front portion 4 in an embodiment) which is disposed on a lower side than the holding portion when viewed from a direction along the first portion, and which has a surface (for example, a front surface 4a in an embodiment) facing a front side of the holding device, and the first space may be defined by the front portion, in addition to the first portion and the bottom portion.
(7) In the holding device described in the above (6), a lower end (for example, a lower end 4b in an embodiment) of the front portion may be provided at a position higher than the placement surface, and the bottom portion may include a connection portion (for example, a connection portion 61 in an embodiment) provided to be connected with the lower end of the front portion and to be spaced apart from the placement surface.
(8) In the holding device described in the above (7), a first communication hole (for example, a first communication hole in an embodiment) may be formed in the connection portion, the first communication hole allowing an external space of the holding device and the first space to communicate with each other.
(9) In the holding device described in the above (8), the first communication hole may be opened to face downward relative to a horizontal direction.
(10) In the holding device described in the above (8) or (9), the connection portion may include a projection portion (for example, a projection portion 64 in an embodiment) which projects downward on a front side relative to the first communication hole.
(11) The holding device described in any one of the above (1) to (10) may further include a rear portion (for example, a rear portion 5 in an embodiment) disposed on an opposite side of the second portion with respect to the second space, the rear portion including a surface (for example, a rear surface 5a in an embodiment) which faces a rear side of the holding device, and the second space may be defined by the rear portion, in addition to the second portion and the bottom portion.
(12) In the holding device described in the above (11), the rear portion may include: a rear upper portion (for example, a rear upper portion 71 in an embodiment) including a rear end surface (for example, a rear end surface 71a in an embodiment); and a rear lower portion (for example, a rear lower portion 72 in an embodiment) disposed on a lower side than the rear upper portion, and is recessed forward.
(13) In the holding device described in the above (12), a second communication hole (for example, a second communication hole 73 in an embodiment) may be formed in the rear lower portion, the second communication hole allowing an external space of the holding device and the second space to communicate with each other.
(14) In the holding device described in the above (13), the second communication hole may be opened to face downward relative to a horizontal direction.
(15) In the holding device described in any one of the above (12) to (14), in the rear lower portion, the air-flow generator may be attached to a portion (for example, a portion 72a in an embodiment) which faces the second space.
(16) The holding device described in any one of the above (1) to (15) may further include, in the first space, at least one of a power conversion device (for example, a power conversion device 81 in an embodiment) and a control device (for example, a control device 82 in an embodiment), the power conversion device being provided to be capable of supplying electric power to and from the storage device held in the holding portion, the control device being configured to control the power conversion device. Advantageous Effects of Invention

According to the holding device described in the above (1) of the present invention, in the internal space of the holding device, the air-flow generator that promotes the flow of air passing through the first space and the second space is provided in the second space that communicates with the first space, so that the flow of the air in both the first space and the second space can be promoted. Therefore, the flow of the air in the internal space of the holding device can be promoted.

According to the holding device described in the above (2) of the present invention, the flow path of the air is narrowed by the partition portion, so that the flow velocity of the air can be increased. For example, in a case where the flow velocity of the air is the same, a fan having a smaller output (power consumption) can be used as the air-flow generator.

According to the holding device described in the above (3) of the present invention, the air-flow generator non-disposed space can be utilized as a disposed space for the second terminal. In addition, the flow of the air being blocked by the second terminal can be suppressed.

According to the holding device described in the above (4) of the present invention, it becomes possible to take in and out the storage device obliquely along the first portion or the second portion, so that the user can easily attach and detach the storage device. In addition, also for the holding portion, it becomes possible to disperse the weight of the storage device.

According to the holding device described in the above (5) of the present invention, as compared with a case where the first defined angle is equal to or larger than the second defined angle, the first space is easily constituted to be horizontally longer than the second space. In addition, the second space can be easily vertically longer than the first space.

According to the holding device described in the above (6) of the present invention, the flow path of the air is narrowed by the front portion, so that the flow velocity of the air can be increased.

According to the holding device described in the above (7) of the present invention, the flow path of the air is further narrowed by the connection portion, so that the flow velocity of the air can be further increased.

According to the holding device described in the above (8) of the present invention, as compared with a case where the first communication hole is formed in the front portion, abnormal noise or the like due to the air passing through the first communication hole is hardly transmitted to the front side. In addition, the first communication hole is formed in the connection portion provided to be spaced apart from the placement surface, so that the air can be taken in from the first communication hole. In addition, the first communication hole is formed at a deeper position than the front portion, so that water that drops along the front portion being sucked from the first communication hole can be suppressed.

According to the holding device described in the above (9) of the present invention, as compared with a case where the first communication hole is opened to face the horizontal direction or upward, water and dust entering through the first communication hole can be suppressed.

According to the holding device described in the above (10) of the present invention, the water that drops along the front portion can be blocked by the projection portion so as not to reach the first communication hole.

According to the holding device described in the above (11) of the present invention, the flow path of the air is narrowed by the rear portion, so that the flow velocity of the air can be increased.

According to the holding device described in the above (12) of the present invention, the flow path of the air is further narrowed by the rear lower portion, so that the flow velocity of the air can be further increased.

According to the holding device described in the above (13) of the present invention, as compared with a case where the second communication hole is formed in the rear upper portion, abnormal noise or the like caused by the air passing through the second communication hole is hardly transmitted to the rear side. In addition, the second communication hole is formed in the rear lower portion that is recessed forward, so that the air can be exhausted from the second communication hole. In addition, the second communication hole is formed at a deeper position than the rear upper portion, so that water that drops along the rear upper portion entering the second communication hole can be suppressed.

According to the holding device described in the above (14) of the present invention, as compared with a case where the second communication hole is opened to face the horizontal direction or upward, the water and dust entering through the second communication hole can be suppressed. For example, also in a case where the two holding devices are disposed so that the rear lower portions of them face each other, the exhaust air from the respective second communication holes does not collide with each other right in front, and the exhaust air flow is hardly hindered.

According to the holding device described in the above (15) of the present invention, the rear lower portion is capable of protecting the air-flow generator from an external factor. In addition, this contributes to downsizing of the holding device, as compared with a case where in the rear lower portion, the air-flow generator is attached to a portion (in other words, a portion that faces the external space) opposite to the portion that faces the second space.

According to the holding device described in the above (16) of the present invention, the first space can be utilized as a disposed space for at least one of the power conversion device and the control device (for example, a cooling target). For example, by forcibly cooling the air in the first space, an excessive temperature rise in the internal space due to heat generation of at least one electric circuit of the power conversion device and the control device can be suppressed, and a decrease in the life of the electronic component can be avoided.

### BRIEF DESCRIPTION OF DRAWINGS

[FIG. 1] A perspective view of a holding device according to an embodiment.
[FIG. 2] A perspective view of the holding device according to an embodiment when viewed from a rear lower side.
[FIG. 3] A front view of the holding device according to an embodiment.
[FIG. 4] A front view of a state in which the holding device according to an embodiment holds a storage device.
[FIG. 5] A side view of a state in which the holding device according to an embodiment holds the storage device.
[FIG. 6] A cross-sectional view taken along line VI-VI of FIG. 3.
[FIG. 7] A view showing the flow of air in an internal space of the holding device according to an embodiment.
[FIG. 8] A view showing the flow of water droplets along a front portion of the holding device according to an embodiment.
[FIG. 9] A view in which two holding devices according to an embodiment are disposed so that rear lower portions of them face each other.

### DESCRIPTION OF EMBODIMENTS

Hereinafter, embodiments of the present invention will be described with reference to the drawings. In the following description, as an example of a holding device, description will be made with regard to a storage device holding device that holds a storage battery (a secondary battery) to be detachable, such as a battery as a storage device. Detachable encompasses attachable and detachable. Out of detachable modes, the holding device according to an embodiment has a detachable mode that does not necessitate a separate tool or the like for attachment or detachment. In the following description, expressions indicating relative or absolute arrangements, for example, "parallel", "orthogonal", "center", and "coaxial" not only strictly mean such arrangements but also include a state of being relatively displaced with a tolerance or an angle or a distance at which the same function is obtainable. In the drawings for use in the following description, the scale of each member is appropriately changed in order to make each member recognizable in size.

### <Holding Device>

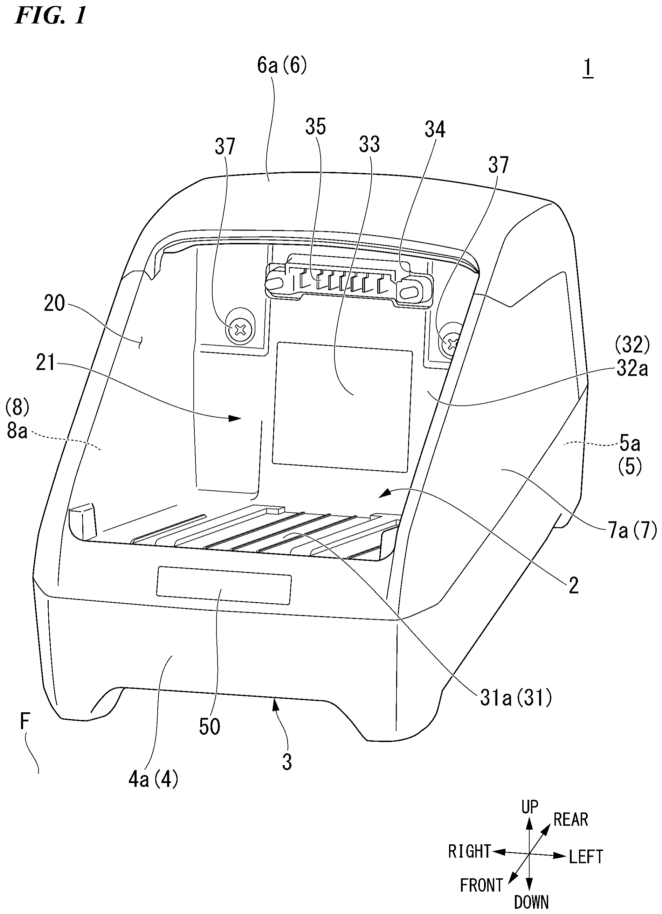

Referring to FIGS. 1 to 6, a holding device 1 includes: a holding portion 2, which holds a storage device 10 to be detachable; a bottom portion 3, which faces a placement surface F when the holding device 1 is placed; a front portion 4 having a front surface 4a, which faces a front side of the holding device 1; a rear portion 5 having a rear surface 5a, which faces a rear side of the holding device 1; an upper portion 6 having an upper surface 6a, which faces an upper side of the holding device 1; a left side portion 7 having a left surface 7a, which faces a left side of the holding device 1; and a right side portion 8 having a right surface 8a, which faces a right side of the holding device 1. In an embodiment, the placement surface F, on which the holding device 1 is placed, is a flat ground or a floor surface (a horizontal surface). In the following description, three axial directions orthogonal to one another as illustrated in the drawings are defined as a front-rear direction, a left-right direction, and an up-down direction. The up-down direction will also be referred to as a vertical direction. A down side in the up-down direction corresponds to a gravity direction.

An opening portion 20 is formed in the holding device 1 from the front portion 4 to the upper portion 6. An accommodation space 21 having a shape that conforms to an outer shape of the storage device 10 is formed inside the holding device 1 through the opening portion 20. The accommodation space 21 is recessed from the upper portion 6 of the holding device 1. The accommodation space 21 is made up of a plurality of surfaces (specifically, a bottom surface (an upper surface 31a of a first portion 31) and three side surfaces (inner side surfaces of the left and right side portions 7 and 8 and a front surface 32a of a second portion 32) that rise from left and right edge portions and a rear end portion of the bottom surface. Note that at least one of the three side surfaces may not necessarily be a flat surface.

The left side portion 7 and the right side portion 8 are formed so that upper ends are inclined to be higher from the front side toward the rear side (to be inclined rearward and upward). The length in the up-down direction of the accommodation space 21 also increases from the front side toward the rear side, and the rear side has the maximum length.

### <Storage Device>

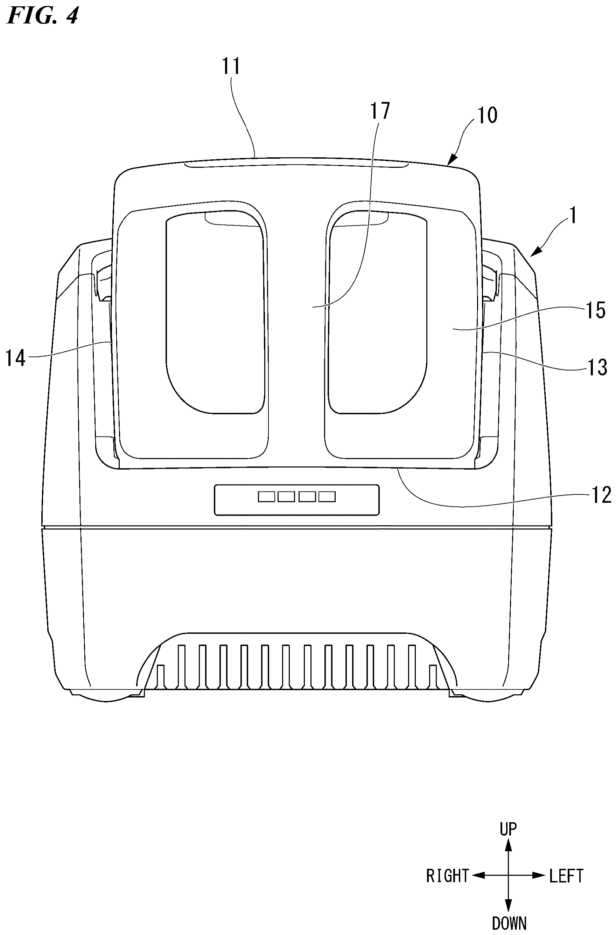

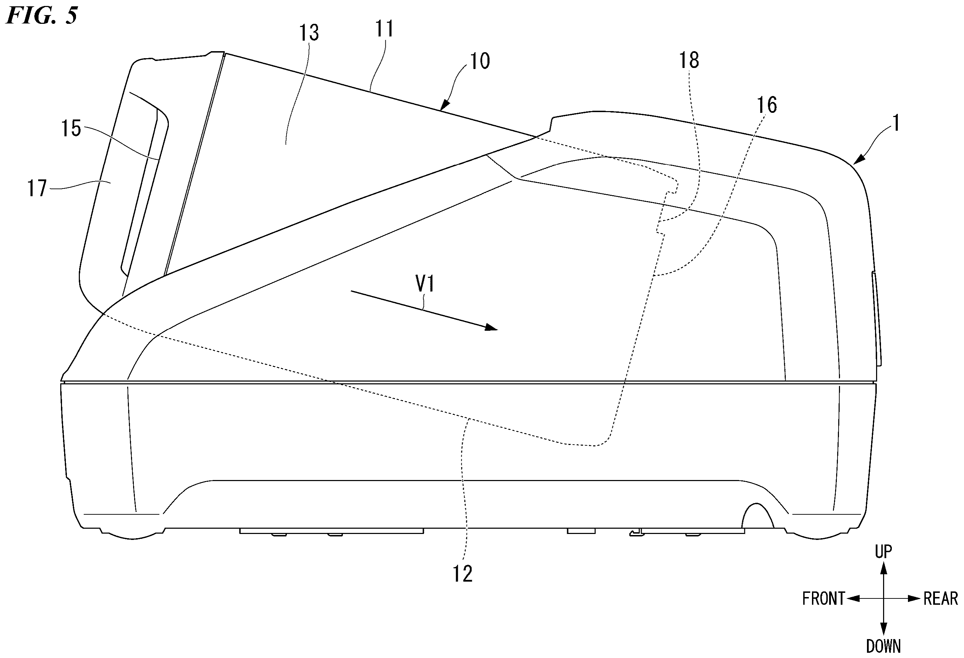

Referring also to FIGS. 4 and 5, the storage device 10 is constituted to be one unit of a single battery pack. For example, the storage device 10 is a lithium-ion battery. For example, it is possible to use the storage device 10 as a power source of a traveling motor mounted on a two-wheeled or four-wheeled electric vehicle. Note that the storage device 10 is not limited to the above one, and can be used for various applications. For example, the storage device 10 may be applied to an electric instrument other than the electric vehicles.

The storage device 10 has a substantially rectangular parallelepiped shape as a whole. Hereinafter, the respective surfaces of the storage device 10 are defined as an upper surface 11, a lower surface 12, a left surface 13, a right surface 14, a front surface 15, and a rear surface 16 with an accommodated state of the storage device 10 in the holding device 1 as a reference. The length in the left-right direction of the storage device 10 is substantially the same as the length in the left-right direction of the accommodation space 21. The length in the up-down direction of the storage device 10 is substantially the same as the maximum length in the up-down direction of the accommodation space 21. The length in the front-rear direction of the storage device 10 is substantially the same as the maximum length in the front-rear direction of the accommodation space 21.

The storage device 10 is accommodated in the accommodation space 21 through the opening portion 20. In the accommodated state of the storage device 10, the upper surface 11 and the front surface 15 of the storage device 10 are exposed from the holding device 1. A handle 17 is provided on the front surface 15 of the storage device 10. For example, a user is able to carry the storage device 10 in a suspended state of holding the handle 17 with the rear surface 16 facing downward. The storage device 10 is capable of standing by itself with the rear surface 16 in contact with the ground or the floor surface.

A first terminal 18 is provided on an upper portion of the rear surface 16 of the storage device 10. For example, the first terminal 18 includes a plurality of metal terminals each having a substantially flat plate shape and disposed to be spaced apart from each other in the left-right direction. For example, the first terminal 18 is a receptacle (a female connector) having a recessed shape and extending in the left-right direction.

### <Holding Portion>

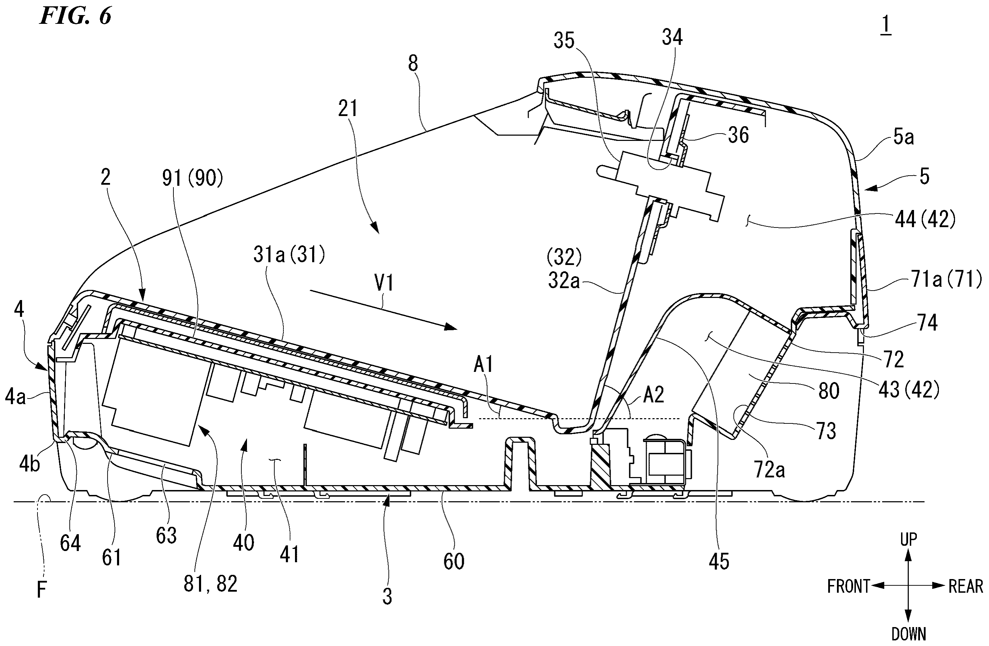

Referring also to FIG. 6, the holding portion 2 includes: a first portion 31, which holds the lower surface 12 of the storage device 10 (an example of a first surface that faces a first direction of the storage device 10); and a second portion 32, which holds the rear surface 16 of the storage device 10 (an example of a second surface that faces a second direction intersecting the first direction of the storage device 10). The holding portion 2 has a substantially letter L shape in a cross-sectional view as a whole. The lengths in the left-right direction of the first portion 31 and the second portion 32 are substantially the same as the length in the left-right direction of the accommodation space 21. The length in the front-rear direction of the first portion 31 is substantially the same as the length in the front-rear direction of the accommodation space 21. The length in the up-down direction of the second portion 32 is substantially the same as the maximum length in the up-down direction of the accommodation space 21.

The holding portion 2 is provided so that the storage device 10 is attached and detached in a direction V1 along the first portion 31. The lower surface 12 of the storage device 10 abuts the upper surface 31a of the first portion 31, when the storage device 10 is accommodated. The rear surface 16 of the storage device 10 abuts the front surface 32a of the second portion 32, when the storage device 10 is accommodated. The upper surface 31a of the first portion 31 is constituted to be smooth for the lower surface 12 of the storage device 10 to be smoothly slidable along the upper surface 31a. For example, a plurality of ribs or rails that extend in the front-rear direction and that are parallel to each other are provided to protrude on the upper surface of the first portion 31 so that a contact area between the upper surface 31a of the first portion 31 and the lower surface 12 of the storage device 10 is made small.

The first portion 31 and the second portion 32 extend in directions that obliquely intersect the bottom portion 3. The upper surface of the first portion 31 is inclined downward toward the rear side. The second portion 32 extends rearward and upward from the rear end portion of the first portion 31 at a substantially right angle with respect to the first portion 31.

In a cross-sectional view, a first defined angle A1 denotes the smallest angle among angles defined by the first portion 31 and the bottom portion 3. Specifically, the first defined angle A1 denotes the smallest defined angle among angles defined by the upper surface 31a of the first portion 31 and a surface parallel to the bottom portion main body 60 in the cross-sectional view. In the cross-sectional view, a second defined angle A2 denotes the smallest defined angle among the angles defined by the second portion 32 and the bottom portion 3. Specifically, the second defined angle A2 is the smallest defined angle among angles defined by the front surface 32a of the second portion 32 and a surface parallel to the bottom portion main body 60 in the cross-sectional view. The first defined angle A1 is smaller than the second defined angle A2.

Referring also to FIG. 1, a region 33 to which a label is attachable is provided on the front surface 32a of the second portion 32. A through hole 34, which penetrates the second portion 32 in the front-rear direction, is formed in an upper portion of the second portion 32. The through hole 34 extends in the left-right direction to correspond to the position of the first terminal 18 of the storage device 10. A second terminal 35 to be attachable to and detachable from the first terminal 18, which is provided on the storage device 10, is provided on an upper rear surface of the second portion 32.

Referring also to FIG. 6, for example, the second terminal 35 is attached to the second portion 32 with a fastening member such as a bolt 37 via a bracket 36. For example, first, the bracket 36 is disposed with a second terminal 35 fixed to the rear surface of the second portion 32. Next, the bolt 37 is fastened to a female screw portion (not illustrated) of the bracket 36 from the outside of the holding device 1 (the front side of the second portion 32). This enables the second terminal 35 to be fixed to the second portion 32 via the bracket 36.

For example, the second terminal 35 includes a plurality of metal terminals each having a substantially flat plate shape and disposed to be spaced apart from each other in the left-right direction. For example, the second terminal 35 is a plug (a male connector) that extends in the left-right direction. The second terminal 35 protrudes forward (specifically, forward and upward) from the through hole 34. In the second terminal 35, a portion that protrudes forward from the through hole 34 is exposed all the time.

For example, the user pushes the storage device 10, which is accommodated in the accommodation space 21, in an arrow V1 direction along the upper surface of the first portion 31. Then, the plug (the second terminal 35) of the holding device 1 is fitted with the first terminal 18 (the receptacle) of the storage device 10. This enables connection between the first terminal 18 and the second terminal 35.

### <Internal Space>

An internal space 40 is formed inside the holding device 1, and the internal space 40 includes: a first space 41, which is defined by the first portion 31 and the bottom portion 3; and a second space 42, which is defined by the second portion 32 and the bottom portion 3, and which communicates with the first space 41.

The first space 41 is formed to be horizontally long. The length in the up-down direction of the first space 41 decreases toward the rear side. The maximum length in the front-rear direction of the first space 41 is longer than the maximum length in the up-down direction of the first space 41.

The second space 42 is formed to be vertically long. The maximum length in the up-down direction of the second space 42 is longer than the maximum length in the up-down direction of the first space 41. The maximum length in the front-rear direction of the second space 42 is shorter than the maximum length in the front-rear direction of the first space 41.

### <Front Portion>

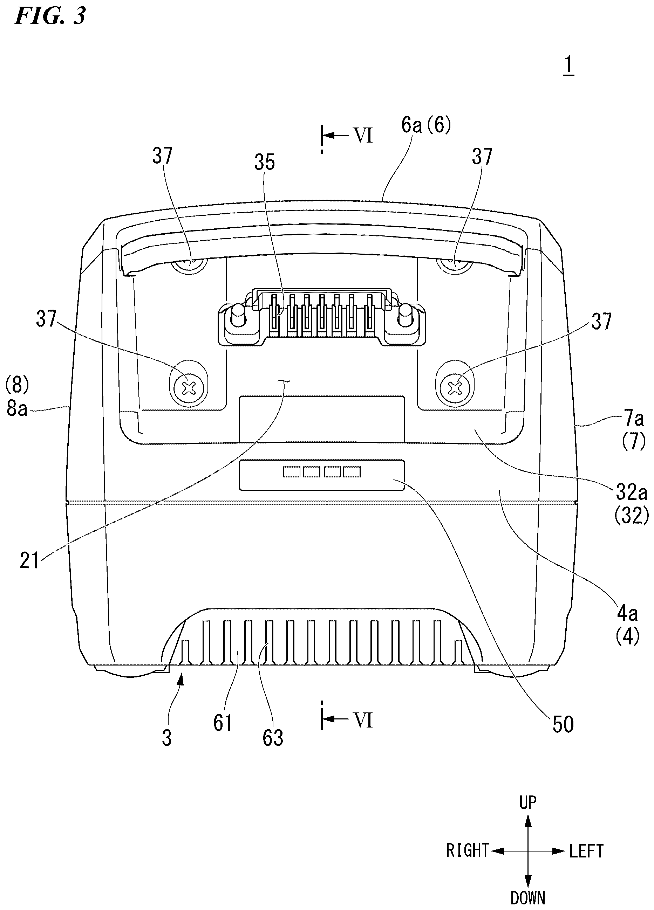

The front portion 4 is disposed to be lower than the holding portion 2, when viewed in the direction V1 along the first portion 31. The front portion 4 includes a front surface 4a, which faces the front side of the holding device 1. A display 50 (see FIG. 3) such as an indicator is provided on the front surface 4a of the front portion 4.

Referring also to FIG. 6, the front surface 4a of the front portion 4 is not limited to facing forward in a substantially horizontal direction, and may be a surface that faces obliquely with respect to the horizontal direction. In the example of the drawing, the front surface 4a of the front portion 4 is inclined so that a lower end 4b is positioned on a rear side relative to an upper end of the front portion 4 in the cross-sectional view. The lower end 4b of the front portion 4 is provided at a position higher than the placement surface F. The first space 41 is defined by the front portion 4, in addition to the first portion 31 and the bottom portion 3.

### <Bottom Portion>

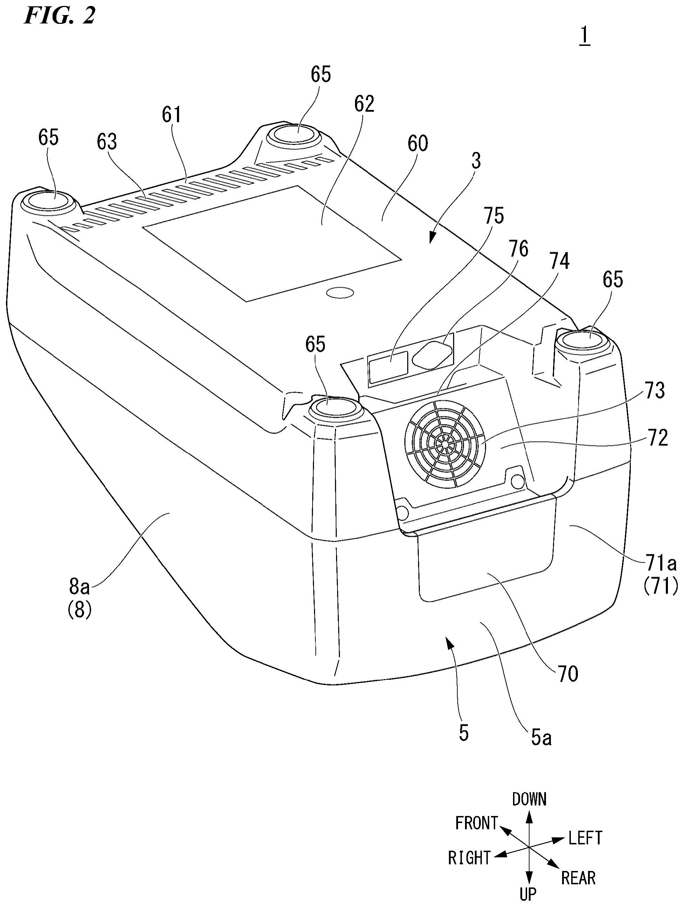

Referring also to FIG. 2, the bottom portion 3 includes: a bottom portion main body 60, which is disposed in parallel with the placement surface F when the holding device 1 is placed; and a connection portion 61, which is provided to be connected with a lower end of the front portion 4 and to be spaced apart from the placement surface F.

The bottom portion main body 60 extends along the front-rear direction. For example, a region 62 to which a label is attachable is provided on a lower surface of the bottom portion main body 60.

The connection portion 61 is inclined downward toward the rear side. In the connection portion 61, a first communication hole 63 is formed to allow an external space of the holding device 1 and the first space 41 to communicate with each other. For example, the first communication hole 63 includes a plurality of slit-shaped intake ports that are spaced apart from each other in the left-right direction. The first communication hole 63 is opened to face downward relative to the horizontal direction. The first communication hole 63 is opened to face forward and downward in the cross-sectional view.

The connection portion 61 includes a projection portion 64, which projects downward on a front side relative to the first communication hole 63. The projection portion 64 is provided to be continuous with the lower end 4b of the front portion 4. In the connection portion 61, a portion between the projection portion 64 and the first communication hole 63 is recessed upward.

On the bottom portion main body 60, foot portions 65 (rubber feet), each of which is made of an elastic body such as rubber, are provided. In the example of the drawing, four foot portions 65 in total are respectively provided at four corner portions (four corner portions) of the bottom portion main body 60. Note that the installed number of the foot portions 65 is not limited to the above number, and can be changed in accordance with a design specification.

### <Rear Portion>

The rear portion 5 is disposed on an opposite side of the second portion 32 with respect to the second space 42. A maintenance lid 70 is provided on the rear portion 5. The rear portion 5 includes the rear surface 5a, which faces the rear side of the holding device 1. The second space 42 is defined by the rear portion 5, in addition to the second portion 32 and the bottom portion 3.

The rear portion 5 includes: a rear upper portion 71 including a rear end surface 71a; and a rear lower portion 72, which is disposed on a lower side than the rear upper portion 71, and which is recessed forward. The rear end surface 71a of the rear upper portion 71 is not limited to facing rearward in a substantially horizontal direction, and may be a surface that faces obliquely with respect to the horizontal direction. In the example of the drawing, the rear end surface 71a of the rear upper portion 71 is inclined so that the lower end of the rear upper portion 71 is positioned on a rear side relative to its upper end in the cross-sectional view.

In the rear lower portion 72, a second communication hole 73 is formed to allow the external space of the holding device 1 and the second space 42 to communicate with each other. For example, the second communication hole 73 includes a plurality of exhaust ports, each of which has an arc shape, and which are disposed to be spaced apart from each other in a radial direction and in a circumferential direction. The second communication hole 73 is opened to face downward relative to the horizontal direction. The second communication hole 73 is opened to face rearward and downward in the cross-sectional view.

The rear lower portion 72 includes a rear projection portion 74, which projects downward on a rear side relative to the second communication hole 73. The rear projection portion 74 is provided to be continuous with the lower end of the rear upper portion 71. In the rear lower portion 72, a portion between the rear projection portion 74 and the second communication hole 73 is recessed upward.

A lower portion of the rear lower portion 72 is recessed forward. For example, a cable connector 75 to which an inter-device communication cable or the like is connectable and a cable jack 76 to which an AC power cable or the like is connectable are provided in a lower portion of the rear lower portion 72. The cable connector 75 and the cable jack 76 are disposed side by side in the left-right direction.

### <Air-Flow Generator>

The holding device 1 includes, in the second space 42, an air-flow generator 80, which promotes the flow of air passing through the first space 41 and the second space 42. For example, the air-flow generator 80 is a cooling fan. In the rear lower portion 72, the air-flow generator 80 is attached to a portion 72a, which faces the second space 42. In the rear lower portion 72, the portion 72a, which faces the second space 42, is inclined downward toward the front side.

### <Partition Portion>

The holding device 1 includes a partition portion 45, which partitions the second space 42 into an air-flow generator disposed space 43 in which the air-flow generator 80 is disposed and an air-flow generator non-disposed space 44 in which the air-flow generator 80 is not disposed. The partition portion 45 extends rearward and upward from the vicinity of the lower end of the second portion 32 in the cross-sectional view. Then, the partition portion 45 is curved upward in the cross-sectional view, and then in the rear lower portion 72, extends rearward and downward toward an upper end of the portion 72a, which faces the second space 42.

The second terminal 35 is disposed in the air-flow generator non-disposed space 44. The second terminal 35 is disposed on an upper side than an upper end of the partition portion 45.

### <Control Device and the like>

The holding device 1 includes, in the first space 41: a power conversion device 81, which is provided to be capable of supplying electric power to and from the storage device 10 held in the holding portion 2; and a control device 82, which controls the power conversion device 81.

For example, the power conversion device 81 is an AC/DC inverter. For example, the power conversion device 81 converts AC power supplied from a power source (for example, system power) into DC power, and supplies the storage device 10 with the DC power.

For example, an AC power source outside the holding device 1 is connected with the power conversion device 81. In this state, when the first terminal 18 of the storage device 10 is connected to the second terminal 35 of the holding device 1, electric power is supplied to the storage device 10 via the power conversion device 81. The storage device 10 is charged, accordingly. Note that it is possible to constitute so that the electric power of the storage device 10 is supplied to the holding device 1, when the first terminal 18 of the storage device 10 is connected to the second terminal 35 of the holding device 1.

Although not illustrated, an electric terminal (a receptacle) to which a plug of an electric instrument, such as an AC power outlet, is connected may be provided in the upper portion 6 of the holding device 1. For example, a DC/AC conversion inverter for converting DC power supplied from the storage device 10 into AC power and supplying the AC power to an electric instrument in connection with such an outlet may be provided inside the holding device 1. In this case, the holding device 1 has a function as a power feeder, in addition to the function as a charger.

The holding device 1 includes a frame 90, which supports the power conversion device 81 and the control device 82, in the first space 41. The frame 90 includes a fixed surface portion 91 having a flat plate shape between the lower surface of the first portion 31, and the power conversion device 81 and the control device 82. For example, the power conversion device 81 and the control device 82 are attached to the fixed surface portion 91 with a fastening member such as a bolt. The power conversion device 81 and the control device 82 are fixed to the fixed surface portion 91 to be suspended from above. A gap is formed between a portion on which the first communication holes 63 are formed in the connection portion 61, and the power conversion device 81 and the control device 82.

### <Flow of Air in Internal Space of Holding Device>

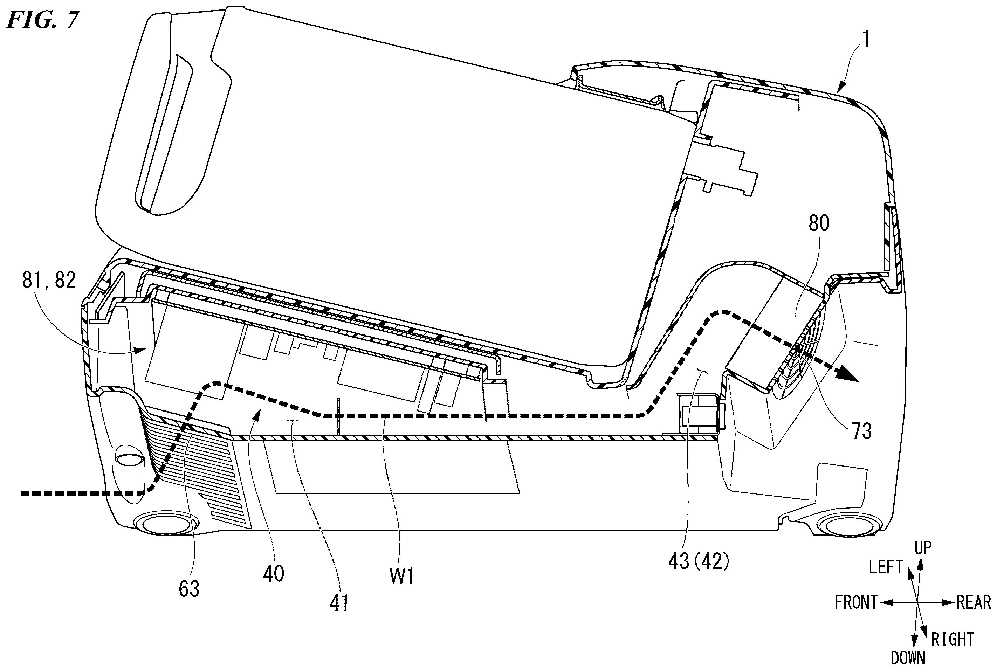

Referring also to FIG. 7, for example, when the cooling fan as the air-flow generator 80 is driven, cooling air flows in the internal space 40 along an arrow W1 direction. For example, by driving the cooling fan, air is forcibly taken into the first space 41 from the external space of the holding device 1 through the first communication hole 63. The air taken into the first space 41 eliminates heat generated by the control device 82 and the like, and then flows into the second space 42 (for example, the air-flow generator disposed space 43). The air that has flowed into the second space 42 is discharged to the external space of the holding device 1 through the second communication hole 73.

Note that the air-flowing direction of the cooling fan (the direction in which the air flows) may be an opposite direction to the arrow W1 direction in the drawing. For example, the air-flow generator 80 in an embodiment is a fan installed for the purpose of cooling, but may be a fan installed for the purpose of heating.

### <Operation and Effects>

As described heretofore, the holding device 1 in the above embodiment includes the holding portion 2, which includes the first portion 31 for holding the lower surface 12 of the storage device 10; and the second portion 32 for holding the rear surface 16 of the storage device 10, and which holds the storage device 10 to be detachable. The holding device 1 includes the bottom portion 3, which faces the placement surface F when the holding device 1 is placed. An internal space 40 is formed inside the holding device 1, and the internal space 40 includes: the first space 41, which is defined by the first portion 31 and the bottom portion 3; and the second space 42, which is defined by the second portion 32 and the bottom portion 3, and which communicates with the first space 41. The holding device 1 includes, in the second space 42, the air-flow generator 80, which promotes the flow of air passing through the first space 41 and the second space 42.

According to this constitution, in the second space 42, which communicates with the first space 41 in the internal space 40 of the holding device 1, the air-flow generator 80, which promotes the flow of the air passing through the first space 41 and the second space 42, is provided, so that the flow of the air in both the first space 41 and the second space 42 can be promoted. Therefore, the flow of the air in the internal space 40 of the holding device 1 can be promoted.

In the above embodiment, the holding device 1 includes the partition portion 45, which partitions the second space 42 into the air-flow generator disposed space 43 in which the air-flow generator 80 is disposed and the air-flow generator non-disposed space 44 in which the air-flow generator 80 is not disposed.

According to this constitution, the flow path of the air is narrowed by the partition portion 45, so that the flow velocity of the air can be increased. For example, in a case where the flow velocity of the air is the same, a fan having a smaller output (power consumption) can be used as the air-flow generator 80.

In the above embodiment, the holding device 1 includes the second terminal 35, which is attachable to and detachable from the first terminal 18 provided on the storage device 10, in the air-flow generator non-disposed space 44.

According to this constitution, the air-flow generator non-disposed space 44 can be utilized as the disposed space 43 for the second terminal 35. In addition, the flow of the air being blocked by the second terminal 35 can be suppressed.

In the above embodiment, the first portion 31 and the second portion 32 extend in directions that obliquely intersect the bottom portion 3.

According to this constitution, it becomes possible to take in and out the storage device 10 obliquely along the first portion 31 or the second portion 32, so that the user can easily attach and detach the storage devices 10. In addition, also for the holding portion 2, it becomes possible to disperse the weight of the storage device 10.

In the above embodiment, the first defined angle A1, which is the smallest defined angle among the angles defined by the first portion 31 and the bottom portion 3, is smaller than the second defined angle A2, which is the smallest defined angle among the angles defined by the second portion 32 and the bottom portion 3.

According to this constitution, as compared with a case where the first defined angle A1 is equal to or larger than the second defined angle A2, the first space 41 is easily constituted to be a horizontally longer space than the second space 42. In addition, the second space 42 can be easily made a vertically longer space than the first space 41.

In the above embodiment, the holding portion 2 is provided to attach and detach the storage device 10 in the direction V1 along the first portion 31. The holding device 1 includes the front portion 4, which is disposed to be lower than the holding portion 2 when viewed in the direction V1 along the first portion 31, and includes the front surface 4a, which faces the front side of the holding device 1. The first space 41 is defined by the front portion 4, in addition to the first portion 31 and the bottom portion 3.

According to this constitution, the flow path of the air is narrowed by the front portion 4, so that the flow velocity of the air can be increased.

In the above embodiment, the lower end 4b of the front portion 4 is provided at a position higher than the placement surface F. The bottom portion 3 includes the connection portion 61, which is provided to be connected with the lower end 4b of the front portion 4 and to be spaced apart from the placement surface F.

According to this constitution, the flow path of the air is further narrowed by the connection portion 61, so that the flow velocity of the air can be further increased.

In the above embodiment, the first communication hole 63, which allows the external space of the holding device 1 and the first space 41 to communicate with each other, is formed in the connection portion 61.

According to this constitution, as compared with a case where the first communication hole 63 is formed in the front portion 4, abnormal noise or the like due to the air passing through the first communication hole 63 is hardly transmitted to the front side. In addition, the first communication hole 63 is formed in the connection portion 61, which is provided to be spaced apart from the placement surface F, so that the air can be taken in from the first communication hole 63. In addition, the first communication hole 63 is formed at a deeper position than the front portion 4, so that water that drops along the front portion 4 being sucked from the first communication hole 63 can be suppressed.

In the above embodiment, the first communication hole 63 is opened to face downward relative to the horizontal direction.

According to this constitution, as compared with a case where the first communication hole 63 is opened to face the horizontal direction or upward, water and dust entering through the first communication hole 63 can be suppressed.

In the above embodiment, the connection portion 61 includes the projection portion 64, which projects downward on a front side relative to the first communication hole 63.

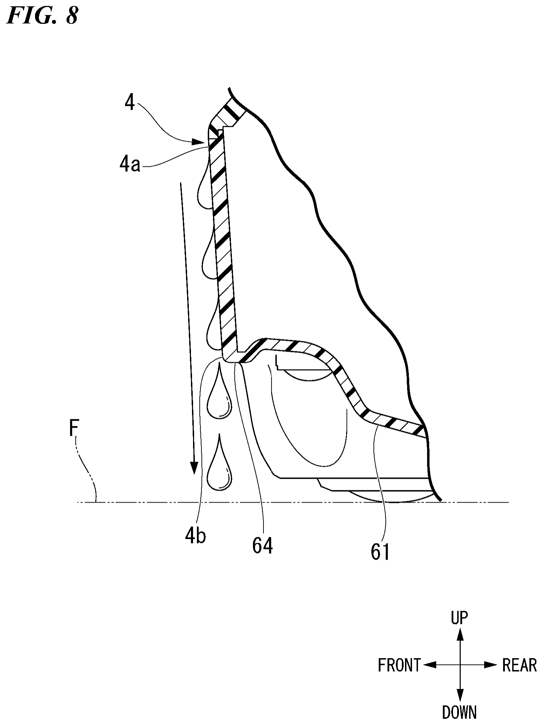

According to this constitution, the water that drops along the front portion 4 can be blocked by the projection portion 64 so as not to reach the first communication hole 63 (see FIG. 8).

In the above embodiment, the holding device 1 includes the rear portion 5, which is disposed on the opposite side of the second portion 32 with respect to the second space 42, and which includes the rear surface 5a, which faces the rear side of the holding device 1. The second space 42 is defined by the rear portion 5, in addition to the second portion 32 and the bottom portion 3.

According to this constitution, the flow path of the air is narrowed by the rear portion 5, so that the flow velocity of the air can be increased.

In the above embodiment, the rear portion 5 includes: the rear upper portion 71, which includes the rear end surface 71a; and the rear lower portion 72, which is disposed on a lower side than the rear upper portion 71, and which is recessed forward.

According to this constitution, the flow path of the air is further narrowed by the rear lower portion 72, so that the flow velocity of the air can be further increased.

In the above embodiment, the rear lower portion 72 is formed with the second communication hole 73 that allows the external space of the holding device 1 and the second space 42 to communicate with each other.

According to this constitution, abnormal noise or the like due to the air passing through the second communication hole 73 is hardly transmitted to the rear side, as compared with a case where the second communication hole 73 is formed in the rear upper portion 71. In addition, the second communication hole 73 is formed in the rear lower portion 72, which is recessed forward, so that the air can be exhausted from the second communication hole 73. In addition, the second communication hole 73 is formed at a deeper position than the rear upper portion 71, so that water that drops along the rear upper portion 71 entering the second communication hole 73 can be suppressed.

In the above embodiment, the second communication hole 73 is opened to face downward relative to the horizontal direction.

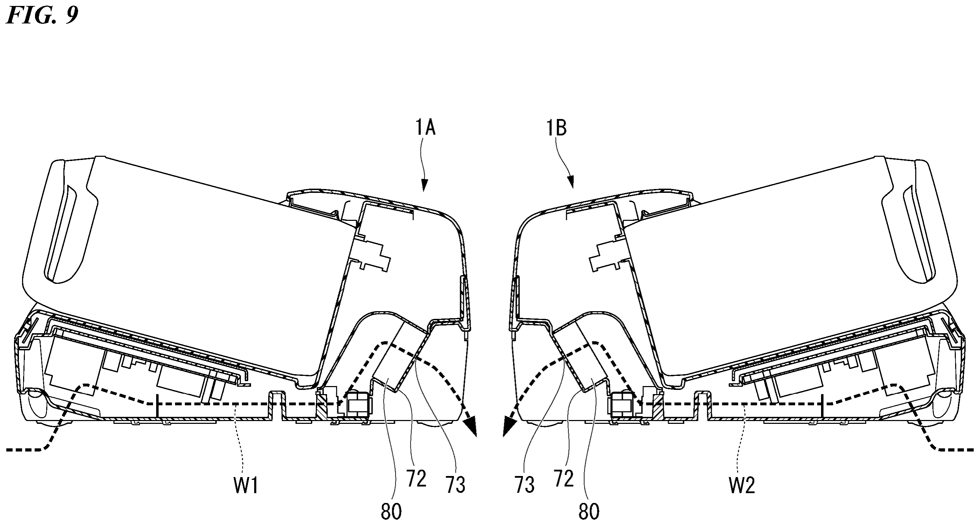

According to this constitution, the water and dust entering through the second communication hole 73 can be suppressed, as compared with a case where the second communication hole 73 is opened to face the horizontal direction or upward. For example, as illustrated in FIG. 9, also in a case where the two holding devices 1A and 1B are disposed so that the rear lower portions 72 of them face each other, the exhaust air from the respective second communication holes 73 does not collide with each other right in front, and the exhaust flow is hardly hindered. In FIG. 9, an arrow W1 direction indicates the air-flowing direction of one holding device 1A, and an arrow W2 direction indicates the air-flowing direction of the other holding device 1B.

In the above embodiment, in the rear lower portion 72, the air-flow generator 80 is attached to the portion 72a, which faces the second space 42.

According to this constitution, the rear lower portion 72 is capable of protecting the air-flow generator 80 from an external factor. In addition, this contributes to downsizing of the holding device 1, as compared with a case where in the rear lower portion 72, the air-flow generator 80 is attached to a portion (in other words, a portion that faces the external space) opposite to the portion 72a, which faces the second space 42.

In the above embodiment, the holding device 1 includes, in the first space 41: the power conversion device 81, which is provided to be capable of supplying electric power to and from the storage device 10 held in the holding portion 2; and the control device 82, which controls the power conversion device 81.

According to this constitution, the first space 41 can be utilized as a disposed space for the power conversion device 81 and the control device 82 (for example, the cooling target). For example, by forcibly cooling the air in the first space 41, an excessive temperature rise in the internal space 40 due to heat generation of the electric circuits of the power conversion device 81 and the control device 82 can be suppressed, and a decrease in the life of the electronic component can be avoided.

### <Modifications>

In the above embodiment, the description has been made with regard to an example in which the holding device includes the partition portion that partitions the second space into the air-flow generator disposed space in which the air-flow generator is disposed and the air-flow generator non-disposed space in which the air-flow generator is not disposed, but the present invention is not limited to this. For example, the holding device may not necessarily include the partition portion. For example, the second space may not necessarily be narrowed by the partition portion. For example, the installed mode of the partition portion can be changed in accordance with a design specification.

In the above embodiment, the description has been made with regard to an example in which the holding device includes, in the air-flow generator non-disposed space, the second terminal to be detachable from the first terminal provided on the storage device, but the present invention is not limited to this. For example, the second terminal may be disposed in the air-flow generator disposed space. For example, the disposed mode of the second terminal can be changed in accordance with a design specification.

In the above embodiment, the description has been made with regard to an example in which the first portion and the second portion extend in directions that obliquely intersect the bottom portion, but the present invention is not limited to this. For example, one of the first portion and the second portion may extend in parallel with the bottom portion. In this case, it is possible to take in and out the storage device horizontally along the first portion or the second portion. For example, the disposed mode of the first portion and the second portion can be changed in accordance with a design specification.

In the above embodiment, the description has been made with regard to an example in which the first defined angle, which is the smallest defined angle among the angles defined by the first portion and the bottom portion, is smaller than the second defined angle, which is the smallest defined angle among the angles defined by the second portion and the bottom portion, but the present invention is not limited to this. For example, the first defined angle may be an angle equal to or larger than the second defined angle. For example, the magnitude relationship between the first defined angle and the second defined angle can be changed in accordance with a design specification.

In the above embodiment, the holding portion is provided to attach and detach the storage device in a direction along the first portion. The holding device includes a front portion disposed on a lower side than the holding portion when viewed from a direction along the first portion and having a surface that faces the front side of the holding device. The description has been made with regard to an example in which the first space is defined by the front portion, in addition to the first portion and the bottom portion, but the present invention is not limited to this. For example, the first space may not necessarily be defined by the front portion. For example, the partition mode of the first space can be changed in accordance with a design specification.

In the above embodiment, the lower end of the front portion is provided at a position higher than the placement surface. The description has been made with regard to an example in which the bottom portion includes the connection portion provided to be connected with the lower end of the front portion and to be spaced apart from the placement surface, but the present invention is not limited to this. For example, the lower end of the front portion may be provided at the same height in position as the placement surface. For example, the bottom portion may not necessarily include the connection portion. For example, the installed mode of the connection portion can be changed in accordance with a design specification.

In the above embodiment, the description has been made with regard to an example in which the first communication hole that allows the external space of the holding device and the first space to communicate with each other is formed in the connection portion, but the present invention is not limited to this. For example, the first communication hole may not necessarily be formed in the connection portion. For example, the first communication hole may be formed in the front portion. For example, the disposed mode of the first communication hole can be changed in accordance with a design specification.

In the above embodiment, the description has been made with regard to an example in which the first communication hole is opened to face downward relative to the horizontal direction, but the present invention is not limited to this. For example, the first communication hole may be opened to face the horizontal direction or upward. For example, the opened mode of the first communication hole can be changed in accordance with a design specification.

In the above embodiment, the description has been made with regard to an example in which the connection portion includes the projection portion that projects downward on a front side relative to the first communication hole, but the present invention is not limited to this. For example, the connection portion may not necessarily include the projection portion. For example, the installed mode of the projection portion can be changed in accordance with a design specification.

In the above embodiment, the holding device includes the rear portion disposed on an opposite side of the second portion with respect to the second space and including a surface that faces the rear side of the holding device. The description has been made with regard to an example in which the second space is defined by the rear portion, in addition to the second portion and the bottom portion, but the present invention is not limited to this. For example, the second space may not necessarily be defined by the rear portion. For example, the partition mode of the second space can be changed in accordance with a design specification.

In the above embodiment, the description has been made with regard to an example in which the rear portion includes: the rear upper portion including the rear end surface; and the rear lower portion disposed on a lower side than the rear upper portion and recessed forward, but the present invention is not limited to this. For example, the rear portion may extend along the up-down direction. For example, the rear portion may not necessarily include the portion recessed forward. For example, the constitution mode of the rear portion can be changed in accordance with a design specification.

In the above embodiment, the description has been made with regard to an example in which the second communication hole that allows the external space of the holding device and the second space to communicate with each other is formed in the rear lower portion, but the present invention is not limited to this. For example, the second communication hole may not necessarily be formed in the rear lower portion. For example, the second communication hole may be formed in the rear upper portion. For example, the disposed mode of the second communication hole can be changed in accordance with a design specification.

In the above embodiment, the description has been made with regard to an example in which the second communication hole is opened to face downward relative to the horizontal direction, but the present invention is not limited to this. For example, the second communication hole may be opened to face the horizontal direction or upward. For example, the opened mode of the second communication hole can be changed in accordance with a design specification.

In the above embodiment, the description has been made with regard to an example in which in the rear lower portion, the air-flow generator is attached to a portion that faces the second space, but the present invention is not limited to this. For example, in the rear lower portion, the air-flow generator may be attached to a portion (in other words, a portion that faces the external space) opposite to the portion that faces the second space. For example, the air-flow generator may not necessarily be attached to the rear lower portion. For example, the attached mode of the air-flow generator can be changed in accordance with a design specification.

In the above embodiment, the description has been made with regard to an example in which the holding device includes: in the first space, the power conversion device provided to be capable of supplying electric power to and from the storage device held in the holding portion; and the control device that controls the power conversion device, but the present invention is not limited to this. For example, the holding device may include either the power conversion device or the control device in the second space. For example, the holding device may include at least one of the power conversion device and the control device in the second space. In this case, the second space can be utilized as a disposed space for at least one of the power conversion device and the control device (for example, the cooling target). For example, the disposed mode of at least one of the power conversion device and the control device can be changed in accordance with a design specification.

In the above embodiment, the description has been made with regard to an example in which the plug (the second terminal) to be connectable with the receptacle (the first terminal) of the storage device is provided on the holding device, but the present invention is not limited to this. For example, the receptacle may be provided on the holding device, and in addition, the plug to be fitted with the receptacle may be provided on the storage device. For example, the constitution mode of the first terminal and the second terminal can be changed in accordance with a design specification.

In the above embodiment, the description has been made with regard to an example in which the holding device includes one holding portion that holds a single storage device, but the present invention is not limited to this. For example, the holding device may include a plurality of holding portions that are constituted to be capable of simultaneously holding a plurality of storage devices. For example, the plurality of holding devices may be disposed to be aligned in at least one of the left-right direction and the up-down direction, and may hold a plurality of storage devices simultaneously. For example, the holding mode that the holding device holds the storage device can be changed in accordance with a design specification.

In the above embodiment, the description has been made with regard to, as an example of the holding device, a charger that supplies the battery with electric power from the outside, but the holding device is not limited to this. For example, the holding device may be a power feeder that supplies electric power of the battery to the outside. For example, the holding device may be a power feeder without a charging function. For example, the holding device may be applied to a battery mount portion of an electric power utilization apparatus that utilizes the electric power of the battery. For example, the application mode of the holding device can be changed in accordance with a design specification.

In the above embodiment, the description has been made with regard to, as an example of the holding device, a storage device holding device that holds a storage battery (a secondary battery) such as a battery as the storage device to be detachable, but the holding device is not limited to this. For example, the holding device may hold a capacitor as the storage device. For example, the storage device is not limited to the battery, and may be any other electric power storage device such as the capacitor. For example, the storage device to which the present invention is applied can be changed in accordance with a design specification.

Heretofore, the modes for carrying out the present invention have been described using the embodiments, but the present invention is not limited to the embodiments described above, and various modifications and substitutions can be made without departing from the gist of the present invention.

### REFERENCE SIGNS LIST

1, 1A, 1B Holding device
2 Holding portion
3 Bottom portion
4 Front portion
4a Front surface of front portion (surface that faces front side of holding device)
4b Lower end of front portion
5 Rear portion
5a Rear surface of rear portion (surface that faces rear side of holding device)
10 Storage device
12 Lower surface of storage device (first surface that faces first direction of storage device)
16 Rear surface of storage device (second surface that faces second direction that intersects first direction of storage device)
18 First terminal
31 First portion
32 Second portion
35 Second terminal
40 Internal space
41 First space
42 Second space
43 Air-flow generator disposed space
44 Air-flow generator non-disposed space
45 Partition portion
61 Connection portion
63 First communication hole
64 Projection portion
71 Rear upper portion
71a Rear end surface
72 Rear lower portion
72a Portion that faces second space
73 Second communication hole
80 Air-flow generator
81 Power conversion device
82 Control device
A1 First defined angle
A2 Second defined angle
F Placement surface
V1 Arrow (direction along first portion)

## Claims

1. A holding device comprising a holding portion, the holding portion including a first portion and a second portion, the first portion holding a first surface of a storage device, the first surface facing a first direction, the second portion holding a second surface of the storage device, the second surface facing a second direction which intersects the first direction, the holding portion holding the storage device to be detachable, wherein
the holding device includes a bottom portion which faces a placement surface when the holding device is placed,
an internal space is formed inside the holding device, the internal space including a first space and a second space, the first space being defined by the first portion and the bottom portion, the second space being defined by the second portion and the bottom portion, the second space communicating with the first space, and
the holding device includes, in the second space, an air-flow generator which promotes a flow of air passing through the first space and the second space.

2. The holding device according to claim 1, further comprising
a partition portion which partitions the second space into an air-flow generator disposed space in which the air-flow generator is disposed and an air-flow generator non-disposed space in which no air-flow generator is disposed.

3. The holding device according to claim 2, further comprising
a second terminal provided in the air-flow generator non-disposed space, the second terminal being attachable to and detachable from a first terminal provided on the storage device.

4. The holding device according to any one of claims 1 to 3, wherein
the first portion and the second portion extend in directions which obliquely intersect the bottom portion.

5. The holding device according to claim 4, wherein
a first defined angle which is a smallest defined angle among angles defined by the first portion and the bottom portion is smaller than a second defined angle which is a smallest defined angle among angles defined by the second portion and the bottom portion.

6. The holding device according to any one of claims 1 to 5, wherein
the holding portion is provided to attach and detach the storage device in a direction along the first portion,
the holding device further comprises a front portion which is disposed on a lower side than the holding portion when viewed from a direction along the first portion, and which has a surface facing a front side of the holding device, and
the first space is defined by the front portion, in addition to the first portion and the bottom portion.

7. The holding device according to claim 6, wherein
a lower end of the front portion is provided at a position higher than the placement surface, and
the bottom portion includes a connection portion provided to be connected with the lower end of the front portion and to be spaced apart from the placement surface.

8. The holding device according to claim 7, wherein
a first communication hole is formed in the connection portion, the first communication hole allowing an external space of the holding device and the first space to communicate with each other.

9. The holding device according to claim 8, wherein
the first communication hole is opened to face downward relative to a horizontal direction.

10. The holding device according to claim 8 or 9, wherein
the connection portion includes a projection portion which projects downward on a front side relative to the first communication hole.

11. The holding device according to any one of claims 1 to 10, further comprising
a rear portion disposed on an opposite side of the second portion with respect to the second space, the rear portion including a surface which faces a rear side of the holding device, wherein
the second space is defined by the rear portion, in addition to the second portion and the bottom portion.

12. The holding device according to claim 11, wherein
the rear portion includes:
a rear upper portion including a rear end surface; and
a rear lower portion disposed on a lower side than the rear upper portion, and is recessed forward.

13. The holding device according to claim 12, wherein
a second communication hole is formed in the rear lower portion, the second communication hole allowing an external space of the holding device and the second space to communicate with each other.

14. The holding device according to claim 13, wherein
the second communication hole is opened to face downward relative to a horizontal direction.

15. The holding device according to any one of claims 12 to 14, wherein
in the rear lower portion, the air-flow generator is attached to a portion which faces the second space.

16. The holding device according to any one of claims 1 to 15, further comprising
in the first space, at least one of a power conversion device and a control device, the power conversion device being provided to be capable of supplying electric power to and from the storage device held in the holding portion, the control device being configured to control the power conversion device.
